# FASCICULE DE BREVET EUROPEEN

(11) **EP 2 951 518 B1**
(45) Date de publication et mention de la délivrance du brevet: **29.03.2017**
(21) Numéro de dépôt: 14701746.1
(22) Date de dépôt: 28.01.2014
(51) Int. Cl.: F27B 3/08, F27D 11/10, H05B 7/10, H05B 7/105

(54) **PLAQUE DE CONTACT POUR ÉLECTRODE DE FOUR D'ÉLECTRO-MÉTALLURGIE ET PROCÉDÉ POUR LA FABRICATION D'UNE TELLE PLAQUE**
KONTAKTPLATTE FÜR EINE ELEKTRODE EINES ELEKTROMETALLURGISCHEN OFENS UND VERFAHREN ZUR HERSTELLUNG SOLCH EINER PLATTE
CONTACT PLATE FOR AN ELECTRODE OF AN ELECTRO-METALLURGICAL FURNACE AND METHOD FOR PRODUCING SUCH A PLATE

(30) Priorité: 29.01.2013 FR 1350717
(43) Date de publication de la demande: 09.12.2015
(73) Titulaire: FAI Production, 38420 Domene (FR)
(72) Inventeur: ROCHE, Christian, CH-1965 Saviese (CH)
(74) Mandataire: Casalonga
(86) Numéro de dépôt international: PCT/EP2014/051578
(87) Numéro de publication internationale: WO 2014/118147

(56) Documents cités:
- WO-A1-03/069956
- WO-A1-2004/036958
- WO-A1-2010/103225
- FR-A1- 2 835 687
- FR-A1- 2 891 981
- FR-A1- 2 922 076
- FR-A5- 2 109 430

## Description

La présente invention concerne le domaine notamment des fours d'électrométallurgie dans lesquels des électrodes verticales, généralement cylindriques, sont entourées par un dispositif de connexion électrique qui comprend, généralement, une couronne de plaques de contact en contact avec la paroi de l'électrode, et des moyens de maintien comprenant généralement une couronne de maintien à segments entourant la couronne de plaques et des vérins radiaux interposés entre les plaques et les segments de maintien.

Actuellement, les plaques présentent un canal intérieur continu dont les ouvertures ménagées sur la face supérieure des plaques sont reliées à des conduits extérieurs issus d'une installation de circulation d'un fluide de refroidissement tel que de l'eau, de façon à faire circuler ce fluide dans ledit canal et refroidir les plaques.

Ce canal est réalisé notamment par perçage des plaques et comprend généralement une branche horizontale de liaison, ménagée dans la partie inférieure des plaques et obtenue par perçage horizontal d'un trou borgne ou traversant à partir d'un côté radial des plaques, puis fermeture de sa ou ses extrémités par un ou des bouchons encastrés ou soudés ou vissés et collés.

Il s'avère que l'existence du ou des bouchons ci-dessus, placés dans la partie inférieure, la plus chaude, de la plaque, constitue une faiblesse et représente un danger en cas de décèlement d'un bouchon car, dans ce cas, le fluide de refroidissement se déverse dans le bain et peut provoquer une explosion du bain par évaporation brutale du fluide de refroidissement tel que de l'eau. En outre, la chaleur étant captée principalement dans les zones périphériques de la plaque, la partie centrale de cette dernière a tendance à être plus chaude, ce qui influence négativement le passage du courant et la cuisson de la pâte de l'électrode.

Dans le brevet FR 2 891 981, il est par ailleurs décrit une plaque de contact dans laquelle des trous verticaux sont équipés de conduits axiaux délimitant dans ces trous des espaces périphériques et des espaces centraux reliés au fond des trous et reliés à des trous collecteurs horizontaux de façon à assurer des circulations du fluide de refroidissement en parallèle dans les trous. Il est cependant assez difficile d'obtenir des circulations homogènes en parallèle du fluide de refroidissement dans les différents trous.

La présente invention a pour but d'améliorer les moyens de refroidissement desdites plaques de contact.

Il est proposé une plaque de contact destinée à être mise en contact avec la paroi d'une électrode d'un four d'électrométallurgie.

Cette plaque de contact comprend au moins un canal intérieur présentant au moins une entrée et au moins une sortie susceptibles d'être respectivement reliées à au moins un conduit extérieur d'amenée d'un fluide et à au moins un conduit extérieur d'évacuation de ce fluide.

Au moins un trou allongé est aménagé à l'intérieur duquel est installée une cloison allongée qui présente des bords allongés opposés adjacents à des zones allongées opposées du trou allongé de façon à définir dans ledit trou des espaces allongés de part et d'autre de la cloison allongée, la cloison allongée étant aménagée de façon à définir un passage de communication entre lesdits espaces allongés et des trous de liaison communiquant avec lesdits espaces allongés étant aménagés à distance dudit passage de communication, lesdits espaces allongés formant des portions dudit canal intérieur.

La plaque de contact peut comprendre une pluralité de trous allongés munis de cloisons allongées, dont les espaces allongés sont successivement reliés en série par des trous de liaison aménagés dans la plaque.

Ledit passage de communication peut être aménagé dans le voisinage d'une extrémité dudit trou allongé.

Ledit passage de communication peut être aménagé entre une extrémité de la cloison allongée et une extrémité dudit trou allongé.

Une extrémité de ladite cloison allongée opposée à son extrémité définissant ledit passage de communication peut être portée par un élément de bouchage engagé dans ledit trou allongé.

Ledit trou allongé peut s'étendre de haut en bas et présente une extrémité inférieure borgne, l'extrémité inférieure de ladite cloison allongée définissant un passage de communication aménagé dans le voisinage de cette extrémité borgne, l'extrémité supérieure de la cloison allongée étant portée par un élément de bouchage engagé dans une partie supérieure dudit trou allongé située au-dessus desdits trous de liaison.

Ledit trou et ladite cloison peuvent présenter des nervures allongées opposées et des rainures allongées opposées, qui sont engagées les unes dans les autres.

Ledit trou allongé peut comprendre deux forages allongés cylindriques excentrés se recouvrant partiellement et dont les parties allongées d'intersection déterminent des nervures allongées opposées en saillie.

Il est également proposé un procédé de fabrication d'une plaque verticale présentant des faces intérieures et extérieures, des faces supérieure et inférieure et des faces latérales d'extrémité circonférentielle.

Ce procédé comprend :
percer des trous allongés borgnes à partir de la face supérieure, qui s'étendent vers le bas sans atteindre la face inférieure,
percer au moins un trou horizontal de liaison à partir d'au moins l'une des faces latérales, parallèlement à la face intérieure et à la face supérieure et mettant en communication lesdits trous verticaux,
engager dans au moins certains desdits trous allongés des cloisons allongées dans une position telle que les cloisons présentent des bords allongés opposés adjacents à des zones allongées opposées des trous allongés et déterminent un passage de communication dans le voisinage des extrémités inférieures borgnes des trous, les cloisons allongées étant solidaires d'éléments de bouchage des trous allongés situés au-dessus dudit trou horizontal.

Le procédé comprend : effectuer les étapes précitées dans une plaque plate et, dans une étape ultérieure, à cintrer cette plaque de telle sorte que sa face intérieure forme un segment de cylindre.

La présente invention sera mieux comprise à l'étude de plaques de contact pour des électrodes notamment de four d'électrométallurgie, décrites à titre d'exemples non-limitatifs et illustrés par le dessin sur lequel :
- La figure 1 représente une vue de dessus partielle d'un équipement de four d'électrométallurgie ;
- La figure 2 représente une coupe horizontale, sensiblement à mi-hauteur de l'équipement de la figure 1 ;
- La figure 3 représente une coupe verticale selon une surface cylindrique d'une plaque selon l'invention, selon III-III de la figure 4 ;
- La figure 4 représente une coupe horizontale selon IV-IV de la plaque de la figure 3 ;
- La figure 5 représente une coupe horizontale partielle de la plaque de la figure 3, dans la zone moyenne d'un trou allongé ;
- La figure 6 représente une coupe horizontale partielle de ladite première plaque, dans la zone d'un élément formant un bouchon partiel ;
- La figure 7 représente une coupe horizontale partielle de ladite première plaque, dans la zone d'un élément formant un bouchon total ; et
- La figure 8 représente une coupe verticale selon une surface cylindrique d'une autre plaque selon l'invention.

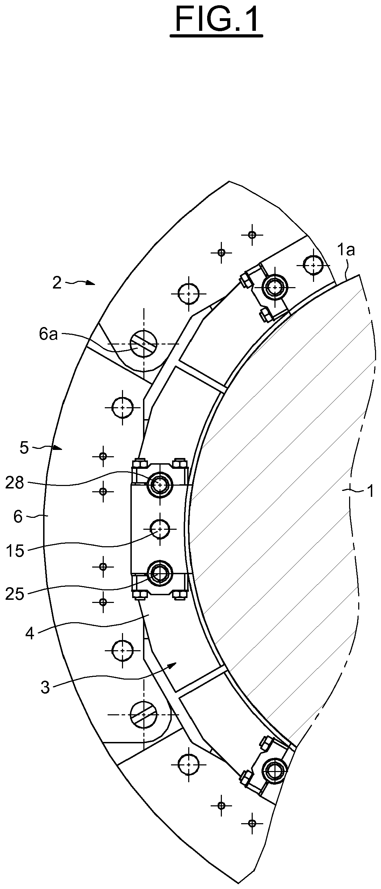

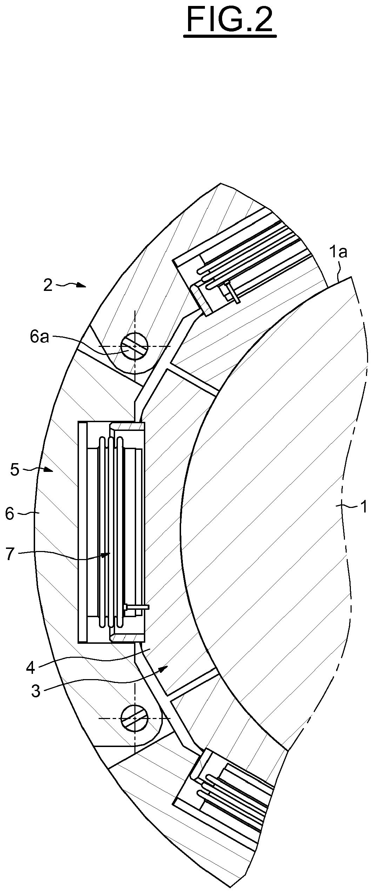

En se reportant aux figures 1 et 2, on peut voir qu'on a représenté, partiellement, un équipement d'un four d'électrométallurgie qui comprend une électrode cylindrique verticale 1, incluant une pâte à cuire, entourée par un dispositif de connexion électrique 2.

Ce dispositif de connexion électrique 2 comprend une couronne suspendue 3 constituée d'une pluralité de plaques de contact 4 voisines circonférentiellement et en contact avec la paroi périphérique 1a de l'électrode 1, entourée par exemple par une couronne suspendue de maintien 5 constituée d'une pluralité de segments 6 voisins circonférentiellement et reliés entre eux par des axes verticaux 6a et des vérins 7 interposés entre les plaques de contact 4 et les segments 6.

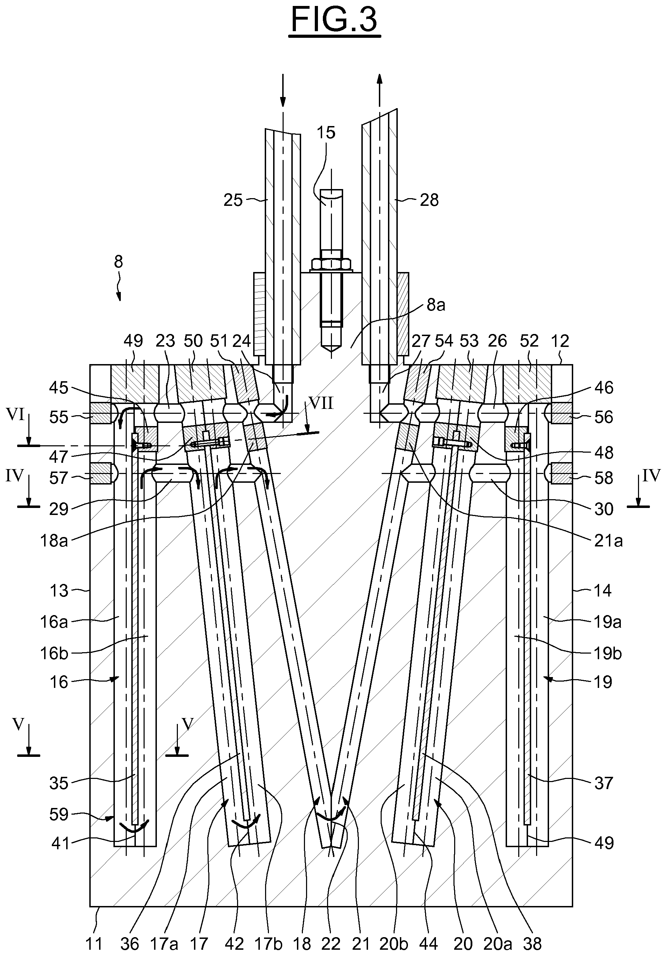

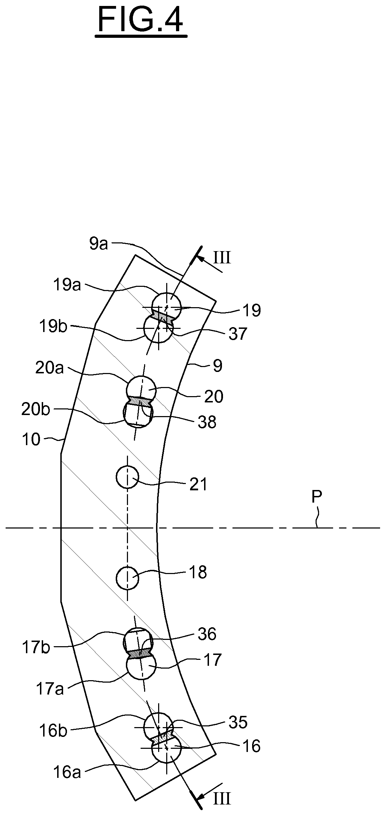

En se reportant aux figures 3 à 7, on va décrire un exemple de réalisation d'une plaque 8 susceptible de constituer respectivement les plaques de contact 4 du dispositif de connexion électrique 2.

La plaque de contact 8 présente une face intérieure cylindrique 9 destinée à être en contact avec l'électrode 1, une face extérieure substantiellement cylindrique 10 concentrique à la face 9, une face inférieure radiale 11, une face supérieure radiale 12 et deux faces verticales d'extrémité circonférentielle 13 et 14 situées dans des plans contenant approximativement l'axe de l'électrode 1.

La plaque de contact 8 comprend une partie centrale 8a en saillie vers le haut par rapport à sa face supérieure 12 et à laquelle est accrochée l'extrémité inférieure d'une barre de suspension 15.

Formés à partir de sa face supérieure 12 en s'étendant vers le bas jusqu'à proximité de sa face inférieure 11 sans atteindre cette dernière et disposés selon une surface cylindrique 9a concentrique à la face intérieure 9, la plaque 8 présente :
- des trous allongés borgnes 16, 17 et 18 débouchant par la partie de la face supérieure 12 située d'un côté de la partie en saillie 8a et disposés successivement à partir de la face d'extrémité 13
- et des trous allongés borgnes 19, 20 et 21 débouchant par la partie de la face supérieure 12 située de l'autre côté de la partie en saillie 8a et disposés successivement à partir de la face d'extrémité 14.

Les trous borgnes 16 et 19 s'étendent verticalement, les trous borgnes 17 et 20 sont légèrement inclinés et s'éloignent des trous 16 et 17 de haut en bas et les trous borgnes 18 et 21 sont encore plus inclinés et se rejoignent à leurs parties inférieures par un passage 22, de telle sorte que les parties extrémités de tous ces trous sont réparties dans le sens circonférentiel de la plaque 8.

Les trous allongés 16, 17 et 18 d'une part et les trous allongés 19, 20 et 21 forment ainsi des groupes de trous disposés symétriquement par rapport à un plan médian P de la plaque 8 passant par l'axe de l'électrode 1.

La plaque de contact 8 présente en outre :
- un trou horizontal borgne 23 qui est formé à partir de sa face d'extrémité 13 et dans la partie supérieure de la plaque 8, qui traverse les trous allongés 16, 17 et 18 et dont l'extrémité intérieure communique avec l'extrémité inférieure d'un trou vertical borgne 24 qui situé dans la zone de la partie en saillie 8a et sur l'extrémité supérieur duquel est branché un conduit extérieur 25
- et, symétriquement par rapport au plan P, un trou horizontal borgne 26 qui est formé à partir de sa face d'extrémité 14 et dans la partie supérieure de la plaque 8, qui traverse les trous allongés 19, 20 et 21 et dont l'extrémité intérieure communique avec l'extrémité inférieure d'un trou vertical borgne 27 qui situé dans la zone de la partie en saillie 8a et sur l'extrémité supérieur duquel est branché un conduit extérieur 28.

La plaque de contact 8 présente également :
- un trou horizontal borgne 29 qui est formé à partir de sa face d'extrémité 13 et dans la partie supérieure de la plaque 8, au-dessous et à distance du trou horizontal 23, qui traverse les trous allongés 16 et 17 et qui débouche dans le trou allongé 18
- et, symétriquement par rapport au plan P, un trou horizontal borgne 30 qui est formé à partir de sa face d'extrémité 14 et dans la partie supérieure de la plaque 8, au-dessous et à distance du trou horizontal 26, qui traverse les trous allongés 19 et 20 et qui débouche dans le trou allongé 21.

Les trous horizontaux 23, 26, 29 et 30 s'étendent en suivant le sens circonférentiel de la plaque de contact 8.

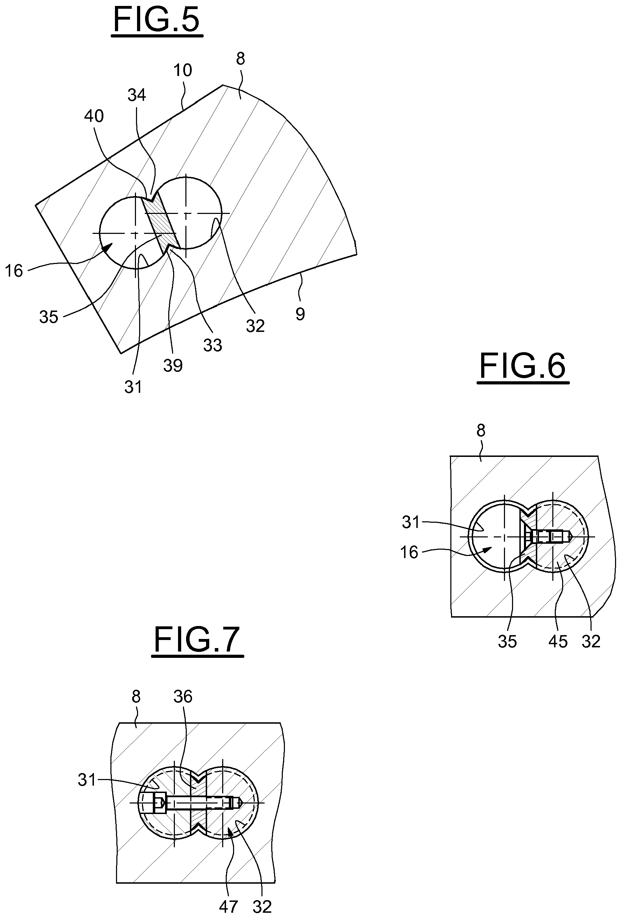

Comme illustré plus particulièrement sur la figure 5, les trous allongés 16, 17, 19 et 20 résultent respectivement de deux forages cylindriques 31 et 32 par exemple de diamètres identiques, qui sont excentrés par rapport au sens circonférentiel de la plaque 8 et se recouvrent partiellement, la distance entre leurs axes étant inférieure à leur diamètre. Les trous 16, 17, 19 et 20 présentent une section en forme de deux pétales circulaires jointifs opposés. Ainsi, les parties allongées d'intersection des forages 31 et 32 déterminent des nervures allongées opposées de positionnement 33 et 34 respectivement en saillie dans les trous 16, 17, 19 et 20, les nervures allongées 33 étant du côté intérieur et les nervures allongées 34 étant du côté extérieur de la plaque 8.

Les trous allongés 18 et 21 résultent de forages cylindriques.

Dans les trous allongés 16, 17, 19 et 20 sont disposées des cloisons allongées 35, 36, 37 et 38 qui les traversent en les divisant et qui comprennent des bords opposés allongés présentant respectivement des rainures allongées opposées de positionnement 39 et 40 dans lesquelles sont respectivement engagées les nervures opposées correspondantes 33 et 34 des trous 16, 17, 19 et 20 (figure 5).

Les extrémités inférieures des cloisons allongées 35, 36, 37 et 38 sont à faibles distances des extrémités inférieures ou fonds des trous allongés 16, 17, 19 et 20 de façon à déterminer des passages correspondants 41, 42, 43 et 44 dans les parties inférieures de ces trous.

Les extrémités supérieures des cloisons allongées 35 et 37 sont portées et fixées sur des éléments d'obturation partielle 45 et 46 qui sont disposés dans les trous allongés 16 et 19, respectivement entre les trous horizontaux 23 et 29 et entre les trous horizontaux 26 et 30. Les éléments d'obturation partielle 45 et 46 obstruent la moitié des trous allongés 16 et 19 en épousant la moitié de leur section, à savoir respectivement les forages situés d'un côté des cloisons allongées 35 et 37 et du côté des trous allongés voisins 17 et 20 (figure 6).

Les extrémités supérieures des cloisons allongées 36 et 38 sont portées et fixées sur des éléments d'obturation totale 47 et 48 qui sont disposés dans les trous allongés 17 et 20, respectivement entre les trous horizontaux 23 et 29 et entre les trous horizontaux 26 et 30. Les éléments d'obturation totale 45 et 46 obstruent totalement les trous allongés 16 et 19 en épousant leur section, à savoir respectivement les forages situés des deux côtés des cloisons allongées 36 et 38 (figure 7). Les éléments 47 et 48 peuvent être en deux parties entre lesquelles sont prises les extrémités supérieures des cloisons allongées 36 et 38.

Ainsi, les cloisons allongées 35, 36, 37 et 38 s'étendent dans des plans contenant substantiellement l'axe de l'électrode 1 et font face à des portions des trous horizontaux 29 et 30.

Les parties des trous allongés 18 et 21 situées respectivement entre les trous 23 et 29 et entre les trous 26 et 30 sont obstruées par des éléments d'obturation totale 18a et 21a.

Les parties supérieures des trous allongés 16, 17, 18, 19, 20 et 21, situées au-dessus des trous horizontaux 23 et 26, sont obstruées par des bouchons 49, 50, 51, 52, 53 et 54.

Les parties d'extrémité des trous horizontaux 23, 26, 29 et 30, situées respectivement entre les faces d'extrémité 13 et 14 de la plaque de contact 8 et les trous allongés 16 et 19, sont obstruées par des bouchons 55, 56, 57 et 58.

Il résulte de ce qui précède que la plaque de contact 8 comprend un canal intérieur 59 dont les extrémités sont reliées aux conduits extérieurs 25 et 28, dont des portions sont définies par les trous verticaux 24 et 27, dont des portions sont définies par les trous horizontaux de liaison 23 et 26, dont des portions sont définies par des portions des trous horizontaux de liaison 29 et 30, dont des portions sont définies, dans les trous 16, 17, 19 et 20, par des espaces allongés d'écoulement 16a-16b, 17a-17b, 19a-19b et 20a-20b qui sont formés de part et d'autre des cloisons allongées 35, 36, 37 et 38 et qui communiquent par les passages inférieurs de communication 41, 42, 43 et 44 et dont des portions sont définies par les trous allongés 18 et 21.

Ainsi, le passage inférieur de communication entre les espaces allongés de chaque trou allongé est situé verticalement à distance des trous horizontaux correspondants dont des portions forment une entrée dans l'un et une sortie de l'autre de ces espaces allongés.

Les conduits d'amenée et d'évacuation 25 et 28 sont reliés à une source de fluide présentant des moyens d'entraînement du fluide.

Ainsi, un fluide de refroidissement tel que de l'eau, entrant par exemple par le conduit extérieur 25, circule successivement ou en série :
- dans le trou vertical 24,
- dans le trou horizontal 23 en passant entre les éléments d'obturation et les bouchons correspondants,
- vers le bas dans l'espace allongé 16a du trou allongé 16,
- vers le haut dans l'espace allongé 16b du trou allongé 16 en ayant traversé le passage inférieur de communication 41,
- vers le bas dans l'espace allongé 17a du trou allongé 17 en ayant traversé une portion du trou horizontal 29,
- vers le haut dans l'espace allongé 17b du trou allongé 17 en ayant traversé le passage inférieur de communication 42,
- vers le bas dans le trou allongé 18 en ayant traversé une portion du trou 29,
- vers le haut dans le trou allongé 21 en ayant traversé le passage inférieur de communication 22,
- vers le bas dans l'espace allongé 20b du trou allongé 20 en ayant traversé une portion du trou horizontal 30,
- vers le haut dans l'espace allongé 20a du trou allongé 20 en ayant traversé le passage inférieur de communication 44,
- vers le bas dans l'espace allongé 19b du trou allongé 19 en ayant traversé une portion du trou horizontal 30,
- vers le haut dans l'espace allongé 19a du trou allongé 19 en ayant traversé le passage inférieur de communication 43,
- dans le trou horizontal 26 en passant entre les éléments d'obturation et les bouchons correspondants,
- et enfin dans le trou vertical 27.

Le fluide est alors évacué par le conduit extérieur 28.

Dans le cas où le fluide de refroidissement entrerait par le conduit extérieur 28, il circulerait dans l'autre sens et serait évacué par le conduit extérieur 25.

Pour fabriquer la plaque de contact 8, on peut procéder de la manière suivante.

On prend une plaque plate, généralement métallique à base de cuivre.

On réalise les trous précités par perçage ou forage.

On met en place les cloisons 35, 36, 37 et 38 munies des éléments de support et d'obturation 45, 46, 47 et 48 en les faisant glisser dans les trous 16, 17, 19 et 20 correspondants, jusqu'à ce que ces éléments viennent en contact sur des épaulements aménagés dans ces trous.

On met en place les éléments d'obturation 18a et 21a et les bouchons d'extrémité 49 à 58 dans les trous correspondants jusqu'à des épaulements aménagés dans ces derniers.

On déforme, par exemple par cintrage à chaud, ladite plaque plate ainsi équipée jusqu'à l'obtention de la plaque de contact 8 de telle sorte que sa face intérieure forme un segment de cylindre.

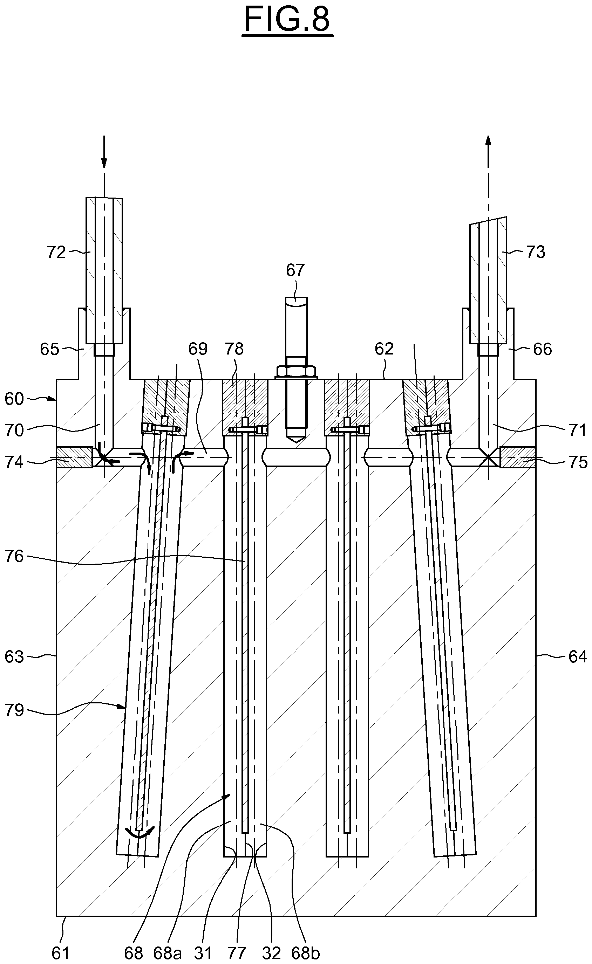

En se reportant à la figure 8, on va maintenant décrire un autre exemple de réalisation d'une plaque 60 susceptible également de constituer respectivement les plaques de contact 4 du dispositif de connexion électrique 2.

La plaque de contact 60 présente une face inférieure radiale 61, une face supérieure radiale 62 et des faces verticales d'extrémité circonférentielle 63 et 64 et comprend des parties 65 et 66 qui sont en saillie vers le haut par rapport à la face supérieure 62 et qui sont situées du côté des faces verticales d'extrémité 63 et 64.

L'extrémité inférieure d'une barre de suspension 67 est accrochée à la zone médiale de la face supérieure 32 de la plaque de contact 60.

La plaque de contact 60 comprend une pluralité de trous allongés borgnes substantiellement verticaux 68, répartis dans le sens circonférentiel de la plaque 60 et aménagés vers le bas à partir de la face supérieure 62 et jusqu'à proximité de la face inférieure 61, sans atteindre cette dernière. Dans l'exemple représenté, quatre trous allongés 68 sont prévus, entre les parties en saille 65 et 66 et par deux de part et d'autre de la zone médiane d'accrochage de la barre de suspension 67.

Les trous allongés 68 sont formés de façon que leurs parties d'extrémité inférieure sont substantiellement réparties entre les faces verticales d'extrémité 63 et 64.

De façon équivalente à l'exemple précédent, les trous allongés 68 résultent respectivement de deux forages cylindriques 31 et 32 (figure 5), par exemple de diamètres identiques, qui sont excentrés par rapport au sens circonférentiel de la plaque 60 et se recouvrent partiellement, la distance entre leurs axes étant inférieure à leur diamètre. Ainsi, comme dans l'exemple précédent, les parties allongées d'intersection des forages 31 et 32 déterminent des nervures allongées opposées de positionnement 33 et 34 respectivement en saillie dans les trous 68, les nervures allongées 33 étant du côté intérieur et les nervures allongées 34 étant du côté extérieur de la plaque de contact 60.

La plaque de contact 60 comprend en outre, dans sa partie supérieure, un trou horizontal 69 qui s'étend dans son sens circonférentiel, d'une de ses faces verticales d'extrémité 63 à son autre face d'extrémité verticale 64 et qui traverse les trous allongés verticaux 68.

La plaque de contact 60 comprend également, dans sa partie supérieure, des trous verticaux 70 et 71 qui sont aménagés de haut en bas dans les parties en saillie 65 et 66, à proximité des faces d'extrémité 63 et 64, et qui débouchent dans le trou horizontal 69.

De façon équivalente à l'exemple précédent, les extrémités des trous verticaux sont reliées à des conduits extérieurs 72 et 73.

Dans les parties d'extrémité du trou horizontal 69 sont insérés des bouchons 74 et 75 qui n'atteignent pas les extrémités inférieures des trous verticaux 70 et 71.

De façon équivalente à l'exemple précédent, les trous allongés 68 sont équipés de cloisons allongées 76 qui les traversent en les divisant et qui comprennent des bords opposés présentent des rainures de positionnement 39 et 40 coopérant avec les nervures 33 et 34 (figure 5).

Les extrémités inférieures des cloisons allongées 76 sont à faibles distances des extrémités inférieures ou fonds des trous allongés 68 de façon à déterminer des passages de communication 77 dans les parties inférieures de ces trous allongés 68.

Les extrémités supérieures des cloisons allongées 76 sont portées et fixées sur des éléments d'obturation totale 78 qui sont disposés dans les extrémités supérieures des trous allongés 68, au-dessus du trou horizontal 68. Les éléments d'obturation totale 45 et 46 obstruent totalement les extrémités supérieures des trous allongés 68 en épousant leur section, à savoir respectivement les forages situés des deux côtés des cloisons allongées 76 (figure 7). Les éléments 78 peuvent être en deux parties entre lesquelles sont prises les extrémités supérieures des cloisons allongées 76.

Ainsi, les cloisons allongées 76 s'étendent dans des plans contenant substantiellement l'axe de l'électrode 1 et font face à des portions du trou horizontal 69.

Il résulte de ce qui précède que la plaque de contact 60 comprend un canal intérieur 79 dont les extrémités sont reliées aux conduits extérieurs 72 et 73, dont des portions sont définies par les trous verticaux 70 et 71, dont des portions sont définies par des portions du trou horizontal de liaison 69, et dont des portions sont définies, dans les trous 68, par des espaces allongés d'écoulement 68a-68b qui sont formés de part et d'autre des cloisons allongées 68 et qui communiquent par les passages inférieurs de communication 77.

En conséquence, le passage inférieur de communication 77 entre les espaces allongés 68a et 68b de chaque trou allongé 68 est situé verticalement à distance du trou horizontal 69 dont des portions correspondantes forment une entrée dans l'un et une sortie de l'autre de ces espaces allongés 68a et 68b.

Les conduits extérieurs d'amenée et d'évacuation 65 et 66 sont reliés à une source de fluide présentant des moyens d'entraînement du fluide.

Ainsi, un fluide de refroidissement tel que de l'eau, entrant par exemple par le conduit extérieur 72, peut circuler successivement dans les trous allongés 68 reliés en série, pour être ensuite évacué par le conduit extérieur 73. Plus précisément, le fluide de refroidissement circule, dans chaque trou allongé 68, vers le bas dans son espace allongé 68a en ayant traversé une portion adjacente du trou horizontal 69, puis vers le haut dans son espace allongé 68b en ayant traversé son passage inférieur de communication 77, puis dans une autre portion adjacente du trou horizontal 69.

Dans le cas où le fluide de refroidissement entrerait par le conduit extérieur 73, il circulerait dans l'autre sens et serait évacué par le conduit extérieur 72.

De façon équivalente à l'exemple précédent, pour fabriquer la plaque de contact 60, on peut procéder de la manière suivante.

On prend une plaque plate, généralement métallique à base de cuivre.

On réalise les trous 68,70 et 71 par perçage ou forage.

On met en place les cloisons 76 munies des éléments de support et d'obturation 78 en les faisant glisser dans les trous allongés 68, jusqu'à ce que ces éléments 78 viennent en contact sur des épaulements aménagés dans ces trous.

On met en place les bouchons d'extrémité 74 et 75 dans les extrémités du trou 69.

On déforme, par exemple par cintrage à chaud, ladite plaque plate ainsi équipée jusqu'à l'obtention de la plaque de contact 60 de telle sorte que sa face intérieure forme un segment de cylindre.

Les plaques de contact qui viennent d'être décrites présentent notamment les avantages suivants.

Elles ne présentent aucun bouchon dans leurs parties basses soumises à la chaleur du bain.

Les moyens de circulation du fluide qu'elles comprennent permettent d'assurer une évacuation de la chaleur mieux répartie dans le volume des plaques, l'obtention de gradients de température plus homogènes ou répartis, un meilleur maintien de la forme géométrique des plaques, une réduction des risques d'amorçage d'arcs électriques entre plaques et électrodes, une meilleure répartition du passage du courant et, en fin de compte, une amélioration de l'homogénéité et du contrôle de la cuisson de la pâte de l'électrode et une diminution de la consommation du fluide de refroidissement tel que de l'eau.

Selon une variante de réalisation, lesdites cloisons allongées insérées dans lesdits trous allongés pourraient s'étendre jusqu'aux extrémités inférieures borgnes de ces trous allongés et pourraient présenter des ouvertures de communication aménagées au travers de leurs parties d'extrémité inférieure.

Selon une variante de réalisation, dans le cas où les trous allongés présenteraient des sections autres que celles proposées, les bords allongés desdites cloisons allongées pourraient être disposés de façon adjacente à des zones allongées opposées des parois desdits trous allongés par d'autres moyens que des nervures et des rainures. Par exemple, dans le cas où les trous allongés présenteraient des sections circulaires, les cloisons allongées pourraient être disposées selon des plans diamétraux des trous allongés et leurs bords allongés seraient adjacents à des zones allongées correspondant aux extrémités de ces plans diamétraux.

La présente invention ne se limite pas aux exemples ci-dessus décrits. Bien des variantes sont possibles sans sortir du cadre de l'invention.

## Revendications

1. Plaque de contact destinée à être mise en contact avec la paroi d'une électrode d'un four d'électrométallurgie, comprenant au moins un canal intérieur présentant au moins une entrée et au moins une sortie susceptibles d'être respectivement reliées à au moins un conduit extérieur d'amenée d'un fluide et à au moins un conduit extérieur d'évacuation de ce fluide,
dans laquelle est aménagé au moins un trou allongé borgne (16, 68) à l'intérieur duquel est installée une cloison allongée (35, 76) qui présente des bords allongés opposés adjacents (39, 40) à des zones allongées opposées (33, 34) du trou allongé de façon à définir dans ledit trou des espaces allongés (16a-16b ; 68a-68b) de part et d'autre de la cloison allongée, la cloison allongée étant aménagée de façon à définir un passage de communication (41, 77) entre lesdits espaces allongés et des trous horizontaux de liaison (29, 69) communiquant avec lesdits espaces allongés étant aménagés à distance dudit passage de communication, lesdits espaces allongés formant des portions dudit canal intérieur (59, 79).

2. Plaque selon la revendication 1, comprenant une pluralité de trous allongés munis de cloisons allongées, dont les espaces allongés sont successivement reliés en série par des trous de liaison aménagés dans la plaque.

3. Plaque selon l'une des revendications 1 et 2, dans laquelle ledit passage de communication est aménagé dans le voisinage d'une extrémité dudit trou allongé.

4. Plaque selon l'une quelconque des revendications précédentes, dans laquelle ledit passage de communication est aménagé entre une extrémité de la cloison allongée et une extrémité dudit trou allongé.

5. Plaque selon l'une quelconque des revendications précédentes, dans laquelle une extrémité de ladite cloison allongée opposée à son extrémité définissant ledit passage de communication est portée par un élément de bouchage engagé dans ledit trou allongé.

6. Plaque selon l'une quelconque des revendications précédentes, dans laquelle ledit trou allongé s'étend de haut en bas et présente une extrémité inférieure borgne, l'extrémité inférieure de ladite cloison allongée définissant un passage de communication aménagé dans le voisinage de cette extrémité borgne, l'extrémité supérieure de la cloison allongée étant portée par un élément de bouchage engagé dans une partie supérieure dudit trou allongé située au-dessus desdits trous de liaison.

7. Plaque selon l'une quelconque des revendications précédentes, dans laquelle ledit trou et ladite cloison présentent des nervures allongées opposées et des rainures allongées opposées, qui sont engagées les unes dans les autres.

8. Plaque selon la revendication 7, dans laquelle ledit trou allongé comprend deux forages allongés cylindriques excentrés se recouvrant partiellement et dont les parties allongées d'intersection déterminent des nervures allongées opposées en saillie.

9. Procédé de fabrication d'une plaque verticale de contact destinée à être mise en contact avec la paroi d'une électrode d'un four d'électrométallurgie, ladite plaque de contact présentant des faces intérieures et extérieures, des faces supérieure et inférieure et des faces latérales d'extrémité circonférentielle, **caractérisé par le fait qu'**il consiste :
à percer des trous allongés borgnes à partir de la face supérieure, qui s'étendent vers le bas sans atteindre la face inférieure,
à percer au moins un trou horizontal de liaison à partir d'au moins l'une des faces latérales, parallèlement à la face intérieure et à la face supérieure et mettant en communication lesdits trous verticaux,
à engager dans au moins certains desdits trous allongés des cloisons allongées dans une position telle que les cloisons présentent des bords allongés opposés adjacents à des zones allongées opposées des trous allongés et déterminent un passage de communication dans le voisinage des extrémités inférieures borgnes des trous, les cloisons allongées étant solidaires d'éléments de bouchage des trous allongés situés au-dessus dudit trou horizontal.

10. Procédé selon la revendication 9, **caractérisé par le fait qu'**il consiste à effectuer les étapes précitées dans une plaque plate et, dans une étape ultérieure, à cintrer cette plaque de telle sorte que sa face intérieure forme un segment de cylindre.

## Patentansprüche

1. Zum Inkontaktbringen mit der Wand einer Elektrode eines elektrometallurgischen Ofens bestimmte Kontaktplatte, umfassend mindestens einen inneren Kanal, der mindestens einen Eingang und mindestens einen Ausgang aufweist, die mit mindestens einem äußeren Fluidzuführungskanal bzw. mindestens einem Kanal zur Abführung dieses Fluids verbunden werden können,
in der mindestens ein Sacklangloch (16, 68) ausgebildet ist, in dem eine längliche Trennwand (35, 76) installiert ist, die einander gegenüberliegende, längliche Ränder (39, 40) neben gegenüberliegenden länglichen Bereichen (33, 34) des Langlochs aufweist, um in dem Loch längliche Räume (16a-16b; 68a-68b) auf beiden Seiten der länglichen Trennwand zu definieren, wobei die längliche Trennwand dazu ausgebildet ist, einen Verbindungsdurchgang (41, 77) zwischen den länglichen Räumen und horizontalen Verbindungslöchern (29, 69) zu definieren, die mit den in einem Abstand von dem Verbindungsdurchgang ausgebildeten länglichen Räumen in Verbindung stehen, wobei die länglichen Räume Teile des inneren Kanals (59, 79) bilden.

2. Platte nach Anspruch 1, die mehrere Langlöcher umfasst, welche mit länglichen Trennwänden versehen sind und deren längliche Räume durch in der Platte ausgebildete Verbindungslöcher hintereinander verbunden sind.

3. Platte nach einem der Ansprüche 1 und 2, wobei der Verbindungsdurchgang in der Nähe eines Endes des Langlochs ausgebildet ist.

4. Platte nach einem der vorhergehenden Ansprüche, wobei der Verbindungsdurchgang zwischen einem Ende der länglichen Trennwand und einem Ende des Langlochs ausgebildet ist.

5. Platte nach einem der vorhergehenden Ansprüche, wobei ein Ende der länglichen Trennwand gegenüber seinem den Verbindungsdurchgang definierenden Ende von einem Verschlusselement getragen wird, das in das Langloch eingreift.

6. Platte nach einem der vorhergehenden Ansprüche, wobei das Langloch von oben nach unten verläuft und ein unteres geschlossenes Ende aufweist, wobei das untere Ende der länglichen Trennwand einen Verbindungsdurchgang definiert, der in der Nähe dieses geschlossenen Endes ausgebildet ist, wobei das obere Ende der länglichen Trennwand von einem Verschlusselement getragen wird, das in einen oberen Teil des Langlochs eingreift, der sich über den Verbindungslöchern befindet.

7. Platte nach einem der vorhergehenden Ansprüche, wobei das Loch und die Trennwand längliche gegenüberliegende Rippen und gegenüberliegende längliche Nuten aufweisen, die miteinander in Eingriff stehen.

8. Platte nach Anspruch 7, wobei das Langloch zwei längliche exzentrische zylindrische Bohrungen umfasst, die sich teilweise überlappen und deren längliche Kreuzungsteile vorragende längliche gegenüberliegende Rippen bestimmen.

9. Verfahren zur Herstellung einer vertikalen Kontaktplatte, die zum Inkontaktbringen mit der Wand einer Elektrode eines elektrometallurgischen Ofens bestimmt ist, wobei die Kontaktplatte eine Innen- und Außenseite, eine Ober- und Unterseite und laterale Umfangsendseiten aufweist, **dadurch gekennzeichnet, dass** es Folgendes umfasst:
Bohren von Sacklanglöchern aus der Oberseite, die nach unten verlaufen, ohne die Unterseite zu erreichen,
Bohren mindestens eines horizontalen Verbindungslochs aus mindestens einer der lateralen Seiten parallel zur Unterseite und Oberseite und Verbinden der vertikalen Löcher,
Ineingriffbringen in mindestens bestimmte der Langlöcher von länglichen Trennwänden in einer solchen Position, dass die Trennwände gegenüberliegende längliche Ränder neben gegenüberliegenden länglichen Bereichen der Langlöcher aufweisen und einen Verbindungsdurchgang in der Nähe der unteren geschlossenen Enden der Löcher bestimmen, wobei die länglichen Trennwände fest mit Verschlusselementen der Langlöcher verbunden sind, die sich über dem horizontalen Loch befinden.

10. Verfahren nach Anspruch 9, **dadurch gekennzeichnet, dass** es Durchführen der genannten Schritte in einer flachen Platte und in einem Folgeschritt Biegen dieser Platte derart, dass ihre Innenseite ein Zylindersegment bildet, umfasst.

## Claims

1. Contact plate intended to be placed in contact with the wall of an electrode of an electro-metallurgical furnace, comprising at least one internal channel having at least one inlet and at least one outlet likely to be respectively linked to at least one external fluid intake duct and to at least one external duct for discharging this fluid,
in which is formed at least one blind elongate hole (16, 68) inside which is installed an elongate partition (35, 76) which has opposing elongate edges (39, 40) adjacent to opposing elongate zones (33, 34) of the elongate hole so as to define, in said hole, elongate spaces (16a-16b; 68a-68b) on either side of the elongate partition, the elongate partition being formed in such a way as to define a connecting passage (41, 77) between said elongate spaces and horizontal link holes (29, 69) communicating with said elongate spaces being formed at a distance from said connecting passage, said elongate spaces forming portions of said internal channel (59, 79).

2. Plate according to Claim 1, comprising a plurality of elongate holes provided with elongate partitions, in which the elongate spaces are successively linked in series by link holes formed in the plate.

3. Plate according to one of Claims 1 and 2, in which said connecting passage is formed in the vicinity of an end of said elongate hole.

4. Plate according to any one of the preceding claims, in which said connecting passage is formed between an end of the elongate partition and an end of said elongate hole.

5. Plate according to any one of the preceding claims, in which an end of said elongate partition opposite to its end defining said connecting passage is borne by a blocking element fitted into said elongate hole.

6. Plate according to any one of the preceding claims, in which said elongate hole extends from top to bottom and has a blind bottom end, the bottom end of said elongate partition defining a connecting passage formed in the vicinity of this blind end, the top end of the elongate partition being borne by a blocking element fitted into a top part of said elongate hole situated above said link holes.

7. Plate according to any one of the preceding claims, in which said hole and said partition have opposing elongate ribs and opposing elongate grooves, which are fitted into one another.

8. Plate according to Claim 7, in which said elongate hole comprises two eccentric cylindrical elongate drillings partially overlapping and of which the intersecting elongate parts determine protruding opposing elongate ribs.

9. Method for manufacturing a vertical contact plate intended to be placed in contact with the wall of an electrode of an electro-metallurgical furnace, said contact plate having inner and outer faces, top and bottom faces and circumferential end side faces, **characterized in that** it consists:
in drilling blind elongate holes from the top face, which extend downward without reaching the bottom face,
in drilling at least one horizontal link hole from at least one of the side faces, parallel to the inner face and to the top face and connecting said vertical holes,
in fitting, into at least some of said elongate holes, elongate partitions in a position such that the partitions have opposing elongate edges adjacent to opposing elongate zones of the elongate holes and determine a connecting passage in the vicinity of the blind bottom ends of the holes, the elongate partitions being secured to plugging elements of the elongate holes situated above said horizontal hole.

10. Method according to Claim 9, **characterized in that** it consists in performing the above-mentioned steps in a flat plate and, in a subsequent step, in bending this plate in such a way that its inner face forms a cylinder segment.
